(19) Europäisches Patentamt
European Patent Office
Office européen des brevets

(11) Publication number: 0 047 853 B1

(12) **EUROPEAN PATENT SPECIFICATION**

(45) Date of publication of patent specification: **07.01.88**

(51) Int. Cl.$^4$: **G 05 B 19/18**

(21) Application number: **81106068.0**

(22) Date of filing: **03.08.81**

# (54) Machine tool with tool position compensating apparatus and contact detecting apparatus.

(30) Priority: **11.09.80 JP 126789/80**

(43) Date of publication of application: **24.03.82 Bulletin 82/12**

(45) Publication of the grant of the patent: **07.01.88 Bulletin 88/01**

(84) Designated Contracting States: **DE FR GB NL SE**

(56) References cited: **EP-A-0 043 920**, **US-A-4 009 968**

(73) Proprietor: **TOYODA KOKI KABUSHIKI KAISHA**
**1-1, Asahi-machi**
**Kariya-shi Aichi-ken (JP)**

(72) Inventor: **Yamakage, Tetsuro**
**1-7-13, Misono-cho Anjo-shi**
**Aichi-ken (JP)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 047 853 B1

**Description**

Background of the Invention

Field of the Invention:

The present invention relates to a machine tool according to the preamble of claim 1, such a machine tool is subject matter of the EP—A—0 043 920 which represents prior art according to Art. 54(3) EPC.

Description of the Prior Art:

In a conventional machine tool provided with a tool position compensating apparatus, a tool holder incorporates a movable engaging member extending externally therefrom and a tool position compensating mechanism for transmitting movement of the engaging member to a cutting tool to adjust the radial position of the cutting tool. In order to move the engaging member inwardly relative to the tool holder, a drive device is provided on a stationary part. This drive device has to be operated several times to adjust the tool position by a required amount. Accordingly, it takes a longer time for a tool position compensation. Furthermore, in order to move the engaging member several times, a one-way clutch has to be incorporated in the tool position compensating mechanism, which disadvantageously results in a complicated construction.

Summary of the Invention

It is, therefore, an object of the present invention to provide an improved machine tool capable of adjusting a radial position of the cutting tool by utilizing relative movement between a tool spindle and a word table.

Another object of the present invention is to provide an improved machine tool of the character set forth above, wherein tool position adjusting means is provided in a tool holder to be engageable with a work table and relative movement between the tool spindle and the work table is caused to adjust the radial position of the cutting tool after contact between the work table and the adjusting means is detected.

Briefly, according to the present invention, these and other objects are achieved by providing a machine tool, as defined in the characterizing portion of claim 1. A work table is mounted on a machine body for mounting thereon a workpiece to be machined. A spindle head is mounted on the machine body and rotatably supports a tool spindle. A servomotor is provided for effecting relative movement beteen the work table and the tool spindle. Feed control means is connected to the servomotor for controlling the servo motor in accordance with feed pulses and axis designation signals. A cutting tool is supported on a tool holder receivable in the spindle. Means is provided in the tool holder and engageable with the work table for adjusting a radial position of the cutting tool by utilizing relative movement between the work table and the tool spindle. Means is provided for detecting contact between the work table and the adjusting means. Control means is responsive to the detecting means for causing the feed control means to effect relative movement between the work table and the tool spindle to adjust the radial position of the cutting tool.

Brief Description of the Drawings

The foregoing and other objects and many of the attendant advantages of the present invention will be readily appreciated as the same becomes better understood by reference to the following detailed description, when considered in connection with the accompanying drawings, in which:

FIGURE 1 is a schematic illustration of a machine tool with a tool position compensating apparatus and a contact detecting apparatus according to the present invention;

FIGURE 2 is a fragmentary sectional view of a tool holder with the tool position compensating apparatus;

FIGURE 3 is a sectional view taken along the lines III—III in FIGURE 2; and

FIGURE 4 is illustrative of a flow chart showing the tool position compensating operation.

Detailed Description of the Preferred Embodiments

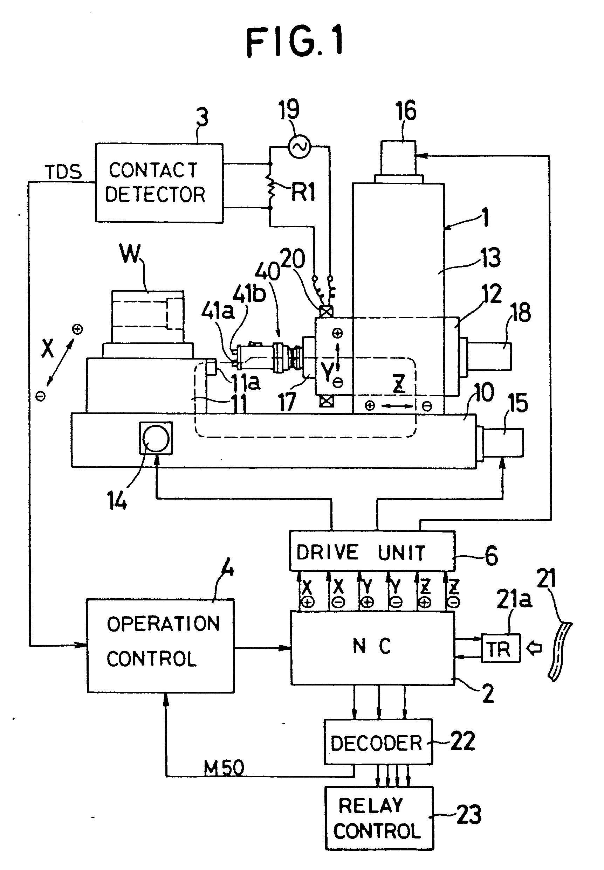

Referring now to the drawings, wherein like reference numerals or characters refer to identical or corresponding parts throughout the several views, and more particularly to FIGURE 1, there is shown a machine tool according to the present invention, which comprises a machine body 1, a numerical control device 2, a contact detecting circuit 3, and an operation control device 4.

Reference numeral 10 indicates a bed of machine body 1, on which a work table 11 for mounting a workpiece W is mounted for sliding movement in a horizontal X-axis direction perpendicular to the plane of the Figure. A column 13 is mounted on bed 10 for sliding movement in a horizontal Z-axis direction orthogonal to the X-axis direction. A spindle head 12 is, in turn, mounted on column 13 for sliding movement in a vertical Y-axis direction. Work table 11 is drivingly connected to a servomotor 14 secured to bed 10 to be moved in the X-axis direction. Column 13 is drivingly connected to a servomotor 15 secured to bed 10 to be moved in the Z-axis direction. Spindle head 12 is drivingly connected to a servomotor 16 mounted on the top of column 13 to be moved in the Y-axis direction. Servomotors 14, 15 and 16 are connected to numerical control device 2 through a drive unit 6 to be rotated by distribution feed pulses generated from numerical control device 2 so as to control relative movement between workpiece W and spindle head 12.

A tool spindle 17 is rotatably supported in spindle head 12 and drivingly connected to a spindle motor 18 secured to the rear of spindle head 12 to be rotated thereby. In order to perform a machine operation on workpiece W, tool spindle 17 is adapted to receive a tool holder 40 incorporating therein a tool position compensating mechanism 48, which is described hereinafter, by means of an automatic tool change device, not shown. A toroidal coil 20 is mounted on the front end of spindle head 12 and connected to an AC power source 19 through a detection resistance R1. Coil 20 is wound around an iron core which surrounds spindle 17. When one of engaging members 41a and 41b, which is described hereinafter, of tool holder 40 is brought into contact with an engaging surface 11a of work table 11, an induced current is produced in a looped circuit including work table 11, bed 10, column 13, spindle head 12, tool spindle 17 and tool holder 40, as shown in dotted lines in FIGURE 1, whereby an exciting current in coil 20 is increased. This causes voltage across resistance R1 to be increased. Contact detecting circuit 3 detects the contact between one of engaging members 41a and 41b and engaging surface 11a by detecting increased voltage across resistance R1. When detecting the contact, contact detecting circuit 3 generates a contact detecting signal TDS.

Numerical control device 2 is of a conventional construction and serves to distribute feed pulses to servomotors 14, 15 and 16 through drive unit 6 to perform a machining operation on workpiece W in accordance with numerical control information, which is recorded on a punched tape 21 readable by a tape reader 21a. Numerical control device 2 is provided with output terminals for outputing M-code data recorded on punched tape 21 and input terminals for receiving command signals from external devices.

M-code data output from numerical control device 2 are applied to a decoder 22 to be decoded thereby, and decoder 22 outputs various auxiliary function commands in accordance with M-code data. Many of the auxiliary function commands are applied to a relay control circuit 23 to control, such as, a valve for the supply of cutting oil. One of auxiliary function commands M50 is applied to operation control device 4 for instructing a tool position compensating operation. Operation control device 4 is constructed by a commercially available general purpose microcomputer which is programmed to control the tool position compensating operation in response to auxiliary function command M50 by switching numerical control device 2 into a manual mode and applying an axis designation data and a pulse distribution command to numerical control device 2.

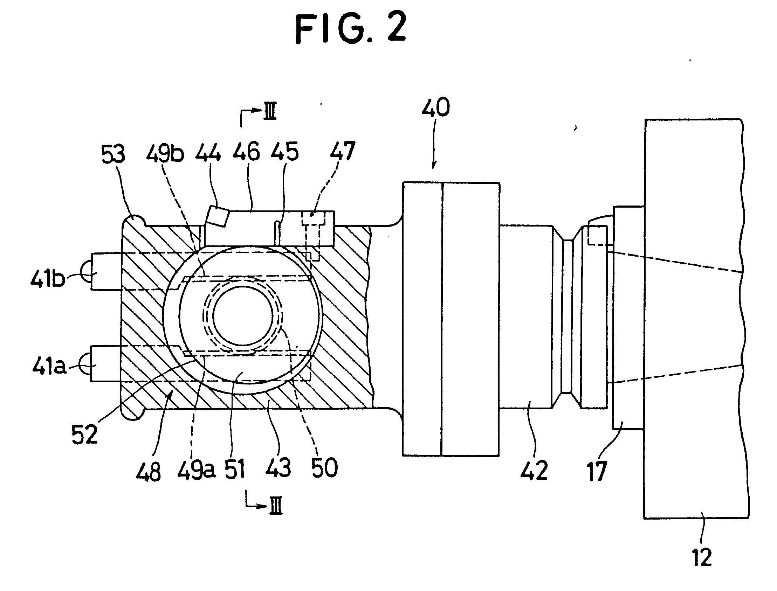

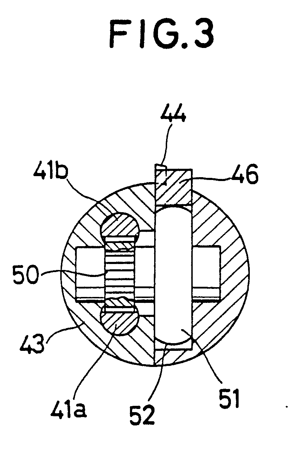

Referring now to FIGURES 2 and 3, tool holder 40 comprises a shank 42 to be inserted into a tapered bore of spindle 17 and a tool mounting shell 43 flange-coupled to shank 42 in co-axial alignment therwith. Shell 43 is formed at the external mid portion thereof with a tool mounting seat on which one end of a cutting tool 46 having a cutting blade 44 at its other end is fixed by means of a bolt 47. Cutting tool 46 is formed at its mid portion with a slot 45 to facilitate the flexing or bending of cutting blade 44. Engaging members 41a and 41b are axially slidably received in mounting shell 43 with a predetermined distance therebetween in the radial direction of shell 43. The one end of each of engaging members 41a and 41b extends from the front end of shell 43. Engaging members 41a and 41b are formed at the other ends with racks 49a and 49b, respectively, in faced relationship with each other. A pinion 50 engaging with both of racks 49a and 49b is rotatably supported within shell 43. An eccentric cam member 51 is integrally formed with pinion 50 and has an external cam surface 52 engaging with the back of cutting blade 44.

When engaging member 41a is moved inwardly, cam member 51 is rotated in the counterclockwise direction, as viewed in FIGURE 2, by rack and pinion mechanism 49a and 50, whereby cutting blade 44 of cutting tool 46 is extended in the radially outward direction through external cam surface 52. On the other hand, when engaging member 41b is moved inwardly, cam member 51 is rotated in the clockwise direction, as viewed in FIGURE 2, whereby cutting blade 44 is retracted in the radially inwardly direction. Accordingly, radial movement of cutting blade 44 is controlled in proportion to the rotary angle of cam member 51, that is, a moving amount of each of engaging members 41a and 41b.

Shell 43 is formed at its front end with a contact head 53 with a predetermined known diameter. When contact head 53 is moved relatively within a machined bore or workpiece W in the diametral direction of the machined bore, the diameter of the machined bore can be measured by counting a moving amount of work table 11 in the X-axis direction until the contact is detected between contact head 53 and the machined bore. A wear amount of cutting tool 46 can be obtained by calculating the difference between the measured diameter of the machined bore and a commanded finish diameter.

The operation of the above-constructed machine tool is hereunder described.

Tool holder 40 for a boring operation is inserted into tapered bore of the tool spindle 17 being positioned at a predetermined angular position by means of the automatic tool change device. Tool spindle 17 is rotated by motor 18 to perform the boring operation on the workpiece by cutting tool 46. Upon completion of the boring operation, contact head 53 is moved relatively in the machined bore to measure a diameter of the machined bore. A wear amount of cutting blade 44 is calculated based upon the measured diameter of the machined bore, and the calculated wear amount is stored as a compensation amount in a register, not shown.

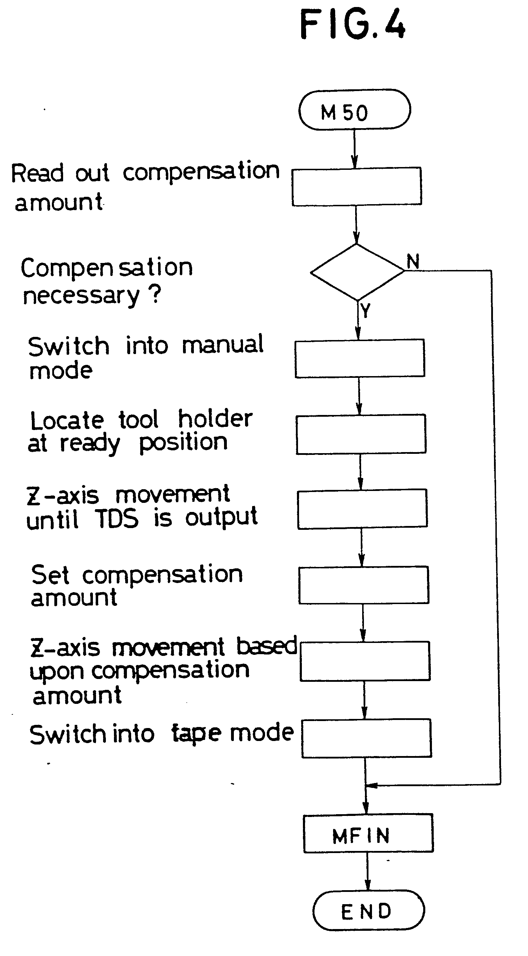

Subsequently, when numerical control device 2 reads auxiliary function command M50 for instruction of the tool position compensating operation, this command is decoded by decoder 22 and applied to operation control device 4. Operation control device 4 performs the tool position compensating operation in response to this command in accordance with the flow chart shown in FIGURE 4.

Operation control device 4 reads out the compensation amount of cutting tool 46 stored in the register to judge whether it is necessary to perform a tool position compensating operation. When it is judged that the tool position compensation is not required, an auxiliary function completion signal MFIN is generated for another subsequent operation.

On the other hand, when it is judged that the tool position compensation is required, operation control device 4 causes numerical control device 2 to be switched into a manual mode. Then, column 13, spindle head 12 and work table 11 are relatively moved to position engaging member 41a in faced relationship with engaging surface 11a of work table 11, as shown in FIGURE 1. Subsequently, column 13 is moved toward work table 11. When contact detecting circuit 3 generates contact detecting signal TDS upon contact of engaging member 41a with engaging surface 11a, movement of column 13 is stopped. The compensating amount stored in the register is then set in a counter, not shown, Each time one feed pulse is distributed to servomotor 15, the content of the counter is subtracted by one. Column 13 is moved toward work table 11 until the content of the counter becomes zero. Accordingly, engaging member 41a is moved inwardly relative to tool holder 40 by an amount corresponding to the wear amount of cutting tool 46, thereby adjusting the radial position of cutting blade 44. When it is ascertained that the content of the counter has become zero, tool holder 40 is returned to a programmed position and numerical control device 2 is switched from the manual mode to a tape mode operation. Finally, auxiliary function completion signal MFIN is generated to complete the tool position compensating operation.

In order to return the tool position compensating mechanism in tool holder 40 into its original state, other engaging member 41b is positioned in faced relationship with engaging surface 11a of work table 11. Column 13 is moved toward work table 11 until contact between engaging member 41b and engaging surface 11a is detected by contact detecting circuit 3. After detection of the contact, column 13 is again moved toward work table 11 to move engaging member 41b inwardly relative to tool holder 40 by an amount corresponding to a total compensating amount.

**Claims**

1. A machine tool comprising a machine body (10), a work table (11) mounted on the machine body (10) for mounting thereon a workpiece (W) to be machined, a spindle head (12) mounted on the machine body (10), a tool spindle (17) rotatably supported in the spindle head (12), feed means (15) for effecting relative movement between the work table (11) and the tool spindle (17), a tool holder (40) receivable in the tool spindle (17) and supporting a cutting tool (46) displaceable in a radial direction thereof, an adjusting mechanism (49a, 49b, 50—52) incorporated in the tool holder (40) for displacing the cutting tool (46) in the radial direction of the tool holder (40), means (3, 19, 20) for detecting contact between the workpiece (W) and the tool holder (40) so as to output a contact detection signal (TDS), and feed control means (2, 4, 6) for controlling the feed means (15) to effect relative movement between the work table (11) and the tool spindle (17), characterized in that engaging means (41a, 41b) engageable with the work table (11) is carried in the tool holder (40) to be movable relative thereto when engaged with the work table (11), and that when the radial position of the cutting tool (46) is to be adjusted, the feed control means (2, 4, 6) controls the feed means (15) first to effect relative movement between the work table (11) and the tool spindle (17) until the contact detection signal (TDS) is output from the contact detection means (3, 19, 20) upon engagement of the engaging means (41a, 41b) with the work table (11) and then to effect relative movement between the work table (11) and the tool spindle (17) by an amount which is required for adjustment of the cutting tool (46) to a desired radial position.

2. A machine tool as set forth in Claim 1, characterized in that the engaging means (41a, 41b) protrudes from a front end of the tool holder (40), and that when the radial position of the cutting tool (46) is to be adjusted, the feed control means (2, 4, 6) controls the feed means (15) to effect relative movement between the work table (11) and the tool spindle (17) in the axial direction of the tool spindle (17).

3. A machine tool as set forth in Claim 2, characterized in that the engaging means (41a, 41b) comprises a pair of engaging members (41a, 41b) axially slidably received in the tool holder (40) and each protruding one end thereof from the front end of the tool holder (40) for engagement with the work table (11), and that the adjusting mechanism (49a, 49b, 50—52) further includes a compensating cam member (51) rotatable in one direction to displace the cutting tool (46) in a radial outward direction when one of the engaging members (41a, 41b) is moved inwardly of the tool holder (40) and also rotatable in the other direction to displace the cutting tool (46) in a radial inward direction when the other of the engaging members (41a, 41b) is moved inwardly of the tool holder (40).

4. A machine tool as set forth in Claim 3, characterized in that the adjusting mechanism (49a, 49b, 50—52) further includes a pair of racks (49a, 49b) respectively formed on the pair of engaging members (41a, 41b) in faced relation with each other and a pinion (50) rotatably carried in meshing engagement with both of the racks (49a, 49b) and drivingly connected with the cam member (51).

5. A machine tool as set forth in Claim 3 or 4, characterized in that the work table (11) is formed with an engaging surface (11a) engageable with each of the engaging members (41a, 41b).

**Patentansprüche**

1. Werkzeugmaschine mit einem Maschinenbett (10), einem Werkstücktisch (11), der auf dem Maschinenbett (10) montiert ist, um darauf ein Werkstück (W), das bearbeitet werden soll, zu montieren einem Spindelkopf (12), der auf dem Maschinenbett (10) befestigt ist, einer Werkzeugspindel (17), die drehbar in dem Spindelkopf (12) gelagert ist, einer Vorschubvorrichtung (15), die dazu dient, den Werkstücktisch (11) und die Werkzeugspindel (17) relativ zueinander zu bewegen, einem Werkzeughalter (40), der an der Werkzeugspindel (17) angebracht werden kann und ein Schneidewerkzeug (46) trägt, welches in einer radialen Richtung dazu bewegbar ist, einem Justierungsmechanismus (49a, 49b, 50—52), der in den Werkzeughalter (40) intergriert ist zur Verschiebung des Schneiderwerkzeugs (46) in radialer Richtung des Werkzeughalters (40), mit Vorrichtungen (3, 19, 20) zur Feststellung eines Kontakts zwischen dem Werkstück (W) und dem Werkzeughalter (40) zur Ausgabe eines Kontaktierkennungssignals (TDS) und mit Vorschubsteuervorrichtungen (2, 4, 6) zur Steuerung der Vorschubvorrichtung (15) zur Durchführung einer Relativbewegung zwischen dem Werkstücktisch (11) und der Werkzeugspindel (17), dadurch gekennzeichnet, daß Angriffsvorrichtungen (41a, 41b), die mit dem Werkstücktisch (11) in Angriff bringbar sind, von dem Werkzeughalter (40) getragen werden, damit sie relativ dazu bewegbar sind, wenn sie sich in Angriff mit dem Werkstücktisch (11) befinden, und daß, wenn die radiale Position des Schneidewerkzeugs (46) justiert werden muß, die vorschubsteuervorrichtung (2, 4, 6) die Vorschubvorrichtung (15) steuert, um zuerst eine Relativebewegung zwischen dem Werkstücktisch (11) und der Werkzeugspindel (17) zu bewirken, bis das Kontakterkennungssiganl (TDS) von der Kontakterkennungsvorrichtung (3, 19, 20) ausgegeben wird aufgrund Angriffs der Angriffsvorrichtungen (41a, 41b) an dem Werkstücktisch (11) und dann eine Relativebewegung zwischen dem Werkstücktisch (11) und der Werkzeugspindel (17) um einen Betrag zu bewirken, der erforderlich ist zur Einrichtung des Schneiderwerkzeugs (46) auf eine gewünschte radiale Position.

2. Werkzeugmaschine nach Anspruch 1, dadurch gekennzeichnet, daß die Angriffsvorrichtung (41a, 41b) aus einem vorderen Ende des Werkzeughalters (40) herausragt und daß, wen die radiale Position des Schniedewerkzeugs (46) justiert werden soll, die Vorschubsteuervorrichtung (2, 4, 6) die Vorschubvorrichtung (15) so steuert, daß eine Relativbewegung zwischen dem Werkstücktisch (11) und der Werkzeugspindel (17) in der axialen Richtung der Werkzeugspindel (17) bewirkt wird.

3. Werkzeugmaschine nach Anspruch 2, dadurch gekennzeichnet, daß die Angriffsvorrichtung (41a, 41b) ein Paar von Angriffsgliedern (41a, 41b) umfaßt, die axial verschiebbar in den Werkzeughalter (40) aufgenommen werden und wobei jedes von diesen mit einem Ende aus dem vorderen Ende des Werkzeughalters (40) herausragt zum Angriff an dem Werkstücktisch (11), und daß der Justierungsmechanismus (49a, 49b, 50—52) weiter ein kompensierendes Nockenglied (51) umfaßt, das in einer Richtung drehbar ist, um das Schneiderwerkzeug (46) in einer radial auswärts gerichteten Richtung zu verschieben, wenn eines der Angriffsglieder (41a, 41b) einwärts zu dem Werkzeughalter (40) bewegt wird, und daß es ebenfalls in die andere Richtung drehbar ist, um das Schneidewerkzeug (46) in einer radialen Einwärtsrichtung zu bewegen, wenn das andere der Angriffsglieder (41a, 41b) einwährts zu dem Werkzeughalter (40) bewegt wird.

4. Werkzeugmaschine nach Anspruch 3, dadurch gekennzeichnet, daß der Justierungsmechanismus (49a, 49b, 50—52) weiterhin ein Paar Zahnstangenverzahnungen (49a, 49b) umfaßt, die jeweils auf dem Paar von Angriffsgliedern (41a, 41b) gebildet sind und einander gegenüberliegen, und weiter ein Antriebszahnrad (50) umfaßt, das drehbar gelagert ist in ineinandergreifendem Eingriff mit beiden Zahnstangenverzahnungen (49a, 49b) und antriebsmäßig verbunden ist mit dem Nockenglied (51).

5. Werkzeugmaschine nach Anspruch 3 oder 4, dadurch gekennzeichnet, daß der Werkstücktisch (11) mit einer Ansgriffsfläche (11a) gebildet ist, die mit jedem der Angriffsglieder (41a, 41b) in Angriff bringbar ist.

**Revendications**

1. Machine-outil comportant un corps de machine (10), une table de travail (11) montée sur le corps de machine (10) pour supporter une pièce à usiner (W), une tête porte-broche (12) montée sur le corps de machine (10), une broche porte-outil (17) supportée en rotation dans la tête porte-broche (12), des moyens d'avance (15) pour engendrer un déplacement relatif entre la table de travail (11) et la broche porte-outil (17), un porte-outil (40) pouvant être logé dans la broche porte-outil (17) et supportant un outil de coupe (46) déplaçable dans une direction radiale par rapport au porte-outil, un mécanisme de réglage (49a, 49b, 50—52) incorporé dans la porte outil (40) de mainère à décaler l'outil de coupe (46) dans la direction radiale du porte-outil (40), des moyens (3, 19, 20) pour détecter un contact entre la pièce à usiner (W) et le porte-outil (40) de mainère à délivrer un signal de détection de contact (TDS), et des moyens de commande d'avance (2, 4, 6) pour commander les moyens d'avance (15) afin qu'ils engendrent un déplacement relatif entre la table de travail (11) et la broche porte-outil (17), caractérisée en ce qu des moyens (41a, 41b) d'établissement d'un contact, pouvant venir en contact avec la table de travail (11), sont portés par le porte-outil (40) de mainère à être déplaçables par rapport à ce dernier lorsqu'ils sont en contact avec la table de travail (11) et en ce que, lorsque la position radiale de l'outil de coupe (46) doit être réglée, les moyens de commande d'avance (2, 4, 6) commandent les moyens d'avance (15) tout d'abord pour qu'ils engendrent un déplacement relatif entre la table de travail (11) et la broche porte-outil (17) jusqu'à ce que le signal de détection de contact (TDS) soit délivré par les moyens de détection de contact (3, 19, 20) lors de la venue en contact des moyens (41a, 41b) d'établissement d'un contact avec la table de travail (11), puis pour qu'ils engendrent un déplacement relatif entre la table de travail (11) et la broche porte-outil (17), sur une distance qui est nécessaire pour réaliser le réglage de l'outil de coupe (46) dans une position radiale désirée.

2. Machine-outil selon la revendication 1, caractérisée en ce que les moyens (41a, 41b) d'établissement d'un contact font saillie sur une extrémité avant du porte-outil (40) en en ce que, lorsque la position radiale de l'outil de coupe (46) doit être réglée, les moyens de commande d'avance (2, 4, 6) commandent les moyens d'avance (15) de manière à engendre un déplacement relatif entre la table de travail (11) et la broche porte-outil (17) dans la direction axiale de la broche porte-outil (17).

3. Machine-outil selon la revendication 2, caractérisée en ce que les moyens (41a, 41b) d'établissement d'un comprennent un couple d'organes (41a, 41b) d'établissement d'un contact, qui sont logés de manière à pouvoir coulisser axialement, dans le porte-outil (40) et font chacun saillie, par l'une de leurs extrémités, sur l'extrémité avant du porte-outil (40) de mainère à venir en contact avec la table de travail (11), et en ce que le mécanisme de réglage (49a, 49b, 50—52) comporte en outre un organe formant came de compensation (51), qui peut tourner dans un sens de mainère à décaler l'outil de coupe (46) dans une direction radiale dirigée vers l'extérieur lorsque l'un des organes (41a, 41b) d'établissement d'un contact est déplacé vers l'intérieur du porte-outil (40), et qui peut également tourner dans l'autre sens de manière à décaler l'outil de coupe (46) dans un direction radiale dirigée vers l'intérieur, lorsque le second organe (41a, 41b) d'établissement d'un contact est déplacé vers l'intérieur du porte-outil (40).

4. Machine-outil selon la revendication 3, caractérisé en ce que le mécanisme de réglage (49a, 49b, 50—52) comporte en outre deux crémaillères (49a, 49b) qui sont formées respectivement sur les deux organes (41a, 41b) d'établissement d'un contact, en étant en vis-àvis l'une de l'autre, et un pignon (50) supporté en rotation, engrenant avec les deux crémaillères (49a, 49b) et raccordé selon une liaison d'entraînement, à l'organe formant came (51).

5. Machine-outil selon la revendication 3, ou 4, caractérisé en ce qu la table de travail (11) comporte une surface de contact (11a), avec laquelle chacun des organes (41a, 41b) d'établissement d'un contact peut venir en contact.

# FIG.1

3
19
16
TDS
CONTACT DETECTOR
R1
1
13
W
40
20
41a
41b
12
18
X
Y
Z
11a
11
17
10
15
14
DRIVE UNIT
6
X ⊕
X ⊖
Y ⊕
Y ⊖
Z ⊕
Z ⊖
4
21
21a
OPERATION CONTROL
N C
TR
2
DECODER
22
M50
RELAY CONTROL
23

12
17
42
40
47
45
46
44
49b
53
41b
41a
52
48
49a
51
43
50
III
III

FIG. 2

# FIG.3

44
41b
46
50
43
41a
52
51

# FIG.4

M 50
Read out compensation amount
Compensation necessary ?
N
Y
Switch into manual mode
Locate tool holder at ready position
Z-axis movement until TDS is output
Set compensation amount
Z-axis movement based upon compensation amount
Switch into tape mode
MFIN
END